(19) Europäisches Patentamt
European Patent Office
Office européen des brevets

(11) EP 3 650 493 A2

(12) EUROPEAN PATENT APPLICATION

(43) Date of publication:
**13.05.2020 Bulletin 2020/20**

(51) Int Cl.:
***C08L 9/06*** (2006.01) ***C08K 3/04*** (2006.01)
***B60C 1/00*** (2006.01) ***C08L 25/10*** (2006.01)

(21) Application number: **19206996.1**

(22) Date of filing: **04.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.11.2018 JP 2018208959**

(71) Applicant: **Sumitomo Rubber Industries, Ltd.**
**Kobe-shi, Hyogo-ken 651-0072 (JP)**

(72) Inventor: **TAKAGI, Keiji**
**Kobe-shi, Hyogo-ken, 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) TREAD RUBBER COMPOSITION AND PNEUMATIC TIRE

(57) A tread rubber composition and a pneumatic tire having excellent grip performance under a low load and excellent grip performance under a high load are provided.

The tread rubber composition contains a high-styrene-content styrene-butadiene rubber having a styrene content not less than 35.0% by mass and a vinyl content of 10 to 45% by mass, and large-particle-diameter carbon black having an average particle diameter not less than 20 nm, and M300 at a temperature of 25°C and E* at a temperature of 25°C and a dynamic strain of 0.25% of the tread rubber composition satisfy the following formula.

$$M300/E^* > 0.50$$

EP 3 650 493 A2

**Description**

BACKGROUND OF THE INVENTION

Field of the Invention

The present invention relates to a tread rubber composition and a pneumatic tire.

Description of the Background Art

Tire treads are required to have desired grip performance during running, wear resistance, low fuel consumption performance, etc. For example, in racing or the like, tire treads are required to have desired grip performance under a low load (grip performance at 1st touch) and grip performance under a high load (firm feeling), and thus it is desired to achieve both performances.

Moreover, during tire production, good processability is also required. For example, with a blending formula widely used for racing or the like and containing a large amount of oil, the viscosity becomes low, and the adhesion to a kneading machine deteriorates, so that there is a concern that the process passability deteriorates. Thus, it is also desired to ensure process passability.

SUMMARY OF THE INVENTION

The present invention has been made to solve the above-described problems, and an object of the present invention is to provide a tread rubber composition and a pneumatic tire having excellent grip performance under a low load and excellent grip performance under a high load.

The present invention is directed to a tread rubber composition containing a high-styrene-content styrene-butadiene rubber having a styrene content not less than 35.0% by mass and a vinyl content of 10 to 45% by mass, and large-particle-diameter carbon black having an average particle diameter not less than 20 nm, wherein M300 at a temperature of 25°C and E* at a temperature of 25°C and a dynamic strain of 0.25% of the tread rubber composition satisfy the following formula.

$$M300/E^* > 0.50$$

The tread rubber composition preferably satisfies the following formula.

$$M300/E^* > 0.60$$

The tread rubber composition preferably satisfies the following formula.

$$M300/E^* > 0.70$$

The tread rubber composition preferably has an acetone-extractable content AE that satisfies the following formula.

$$AE \geq 20.0\ [\%]$$

The tread rubber composition preferably has an acetone-extractable content AE that satisfies the following formula.

$$AE \geq 25.0\ [\%]$$

The tread rubber composition preferably has an acetone-extractable content AE that satisfies the following formula.

$$AE \geq 30.0\ [\%]$$

The tread rubber composition preferably contains 60 to 150 parts by mass of the large-particle-diameter carbon black per 100 parts by mass of a rubber component.

The present invention is also directed to a pneumatic tire having a tread formed from the tread rubber composition.

According to the present invention, since the tread rubber composition contains a high-styrene-content styrene-butadiene rubber having a styrene content not less than 35.0% by mass and a vinyl content of 10 to 45% by mass, and large-particle-diameter carbon black having an average particle diameter not less than 20 nm, and M300 at a temperature of 25°C and E* at a temperature of 25°C and a dynamic strain of 0.25% of the tread rubber composition satisfy a predetermined relationship, grip performance under a low load and grip performance under a high load can be improved.

DESCRIPTION OF THE PREFERRED EMBODIMENTS

The tread rubber composition (vulcanized tread rubber composition) of the present invention contains a high-styrene-content styrene-butadiene rubber having a styrene content not less than 35.0% by mass and a vinyl content of 10 to 45% by mass, and large-particle-diameter carbon black having an average particle diameter not less than 20 nm, and M300 of the tread rubber composition at a temperature of 25°C and E* of the tread rubber composition at a temperature of 25°C and a dynamic strain of 0.25% satisfy the following formula.

$$M300/E^{*} > 0.50$$

Accordingly, it is possible to achieve excellent grip performance under a low load and excellent grip performance under a high load.

The reason why such an advantageous effect is achieved is not necessarily clear but is inferred as described below.

The parameter "M300/E* > 0.50" has the meaning that grip performance under a low load (grip performance at 1st touch) and grip performance under a high load (firm feeling) are improved by decreasing E* (25°C, 0.25%) and increasing M300 (25°C). Regarding such an effect, it is inferred that grip performance under a low load (grip performance at 1st touch) is improved by decreasing E* and softening a tread rubber, and grip performance under a high load (firm feeling) is improved by increasing M300 and hardening the tread rubber. Therefore, it is inferred that, in the tread rubber containing the high-styrene-content SBR and the large-particle-diameter carbon black, by satisfying the above parameter, excellent grip performance under a low load and excellent grip performance under a high load can be imparted.

Regarding process passability, for example, when a large amount of oil is contained, there is a problem that the viscosity becomes low and the adhesion to a kneading machine deteriorates. In addition, hardness at large deformation and hardness at small deformation are linked, and there is also a problem that it is difficult to achieve softening at small deformation and hardening at large deformation. For these points, first, regarding the point that the amount of oil is reduced to increase the viscosity and decrease the adhesion to a kneading machine and therefore E* increases, it is inferred that by using the high-styrene-content SBR, polymer Tg decreases and the tread rubber is softened. Furthermore, it is inferred that by using the large-particle-diameter carbon black, softening at small deformation is achieved, and, for example, by increasing the amount of sulfur, hardening at large deformation can be achieved. Therefore, it is inferred that the adhesion to the kneading machine is improved and good process passability is ensured, and excellent grip performance under a low load and excellent grip performance under a high load can also be imparted.

Examples of the method for satisfying the above "M300/E* > 0.50" include (a) a method of blending an appropriate amount of the high-styrene-content SBR, (b) a method of blending an appropriate amount of the large-particle-diameter carbon black, (c) a method of blending an appropriate amount of a softener such as an oil, (d) a method of blending an appropriate amount of a vulcanizing agent such as sulfur, (e) a method of blending an appropriate amount of a vulcanization accelerator, and a method obtained by combining these methods as appropriate.

M300 (stress at 300% elongation) at a temperature of 25°C and E* (complex elastic modulus) at a temperature of 25°C and a dynamic strain of 0.25% of the tread rubber composition (vulcanized tread rubber composition) satisfies the following formula.

$$M300/E^{*} > 0.50$$

When M300 [MPa]/E* [MPa] exceeds 0.50, excellent grip performance under a low load and excellent grip performance under a high load tend to be achieved. M300/E* > 0.60 is preferable, and M300/E* > 0.70 is more preferable. The upper limit of M300/E* is not particularly limited, but M300/E* ≤ 1.20 is preferable, and M300/E* ≤ 1.00 is more preferable.

From the viewpoint of grip performance under a low load and grip performance under a high load, M300 at a temperature of 25°C of the tread rubber composition (vulcanized tread rubber composition) preferably satisfies the following formula.

$$M300 \geq 4.0\ MPa$$

The M300 is preferably not less than 6.0 MPa, more preferably not less than 7.0 MPa, and further preferably not less than 8.0 MPa. The upper limit of the M300 is not particularly limited, but the M300 is preferably not greater than 15.0 MPa and more preferably not greater than 13.0 MPa.

From the viewpoint of grip performance under a low load and grip performance under a high load, E* at a temperature of 25°C and a dynamic strain of 0.25% of the tread rubber composition (vulcanized tread rubber composition) preferably satisfies the following formula.

$$E^{*} \leq 14.0\ MPa$$

The E* is preferably not greater than 12.0 MPa, more preferably not greater than 11.0 MPa, and further preferably not greater than 10.0 MPa. The lower limit of the E* is not particularly limited, but the E* is preferably not less than 6.0 MPa and more preferably not less than 8.0 MPa.

The M300 (300% modulus) is a value measured by a method based on JIS K6251: 2010 described in Examples, and the E* (complex elastic modulus) is a value measured by a method described in Examples.

From the viewpoint of grip performance under a low load and grip performance under a high load, the acetone-extractable content (AE content) of the tread rubber composition (vulcanized tread rubber composition) is preferably not less than 20.0%. The acetone-extractable content is more preferably not less than 25.0% and further preferably not less than 30.0%. The upper limit of the acetone-extractable content is not particularly limited, but the acetone-extractable content is preferably not greater than 60.0% and more preferably not greater than 50.0%.

The acetone-extractable content (AE content) is a value measured by a method described in Examples.

The tread rubber composition contains the high-styrene-content styrene-butadiene rubber (high-styrene-content SBR).

From the viewpoint of grip performance under a low load and grip performance under a high load, the styrene content of the high-styrene-content SBR is not less than 35.0% by mass, preferably not less than 35.2% by mass, and more preferably not less than 35.4% by mass. The upper limit of the styrene content is not particularly limited, but the styrene content is preferably not greater than 60.0% by mass and more preferably not greater than 50.0% by mass.

The styrene content can be measured by a method described in later-described Examples.

From the viewpoint of grip performance under a low load and grip performance under a high load, the vinyl content of the high-styrene-content SBR is 10 to 45% by mass. As for the lower limit of the vinyl content, the vinyl content is preferably not less than 11% by mass and more preferably not less than 15% by mass. As for the upper limit of the vinyl content, the vinyl content is preferably not greater than 43% by mass and more preferably not greater than 40% by mass.

The vinyl content (1,2-bond butadiene unit content) can be measured by a method described in later-described Examples.

From the viewpoint of grip performance under a low load and grip performance under a high load, the amount of the high-styrene-content SBR in 100% by mass of a rubber component is preferably not less than 60% by mass, more preferably not less than 80% by mass, and further preferably not less than 90% by mass, and may be 100% by mass.

The high-styrene-content SBR is not particularly limited, and, for example, an emulsion-polymerized styrene-butadiene rubber (E-SBR), a solution-polymerized styrene-butadiene rubber (S-SBR), and the like can be used. The SBR may be either an unmodified high-styrene-content SBR or a modified high-styrene-content SBR.

The modified high-styrene-content SBR only needs to be an SBR having a functional group that interacts with a filler such as silica, and examples of such a modified SBR include an end-modified SBR obtained by modifying at least one end of an SBR with a compound (modifier) having the functional group (an end-modified SBR having the functional group at an end thereof), a main chain-modified SBR having the functional group in the main chain thereof, a main chain/end-modified SBR having the functional group in the main chain and at an end thereof (for example, a main

chain/end-modified SBR that has the functional group in the main chain thereof and in which at least one end thereof is modified with the modifier), and an end-modified SBR that is modified (coupled) by using a multifunctional compound having two or more epoxy groups in the molecule thereof and to which a hydroxyl group or an epoxy group is introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group are preferable.

As the modified high-styrene-content SBR, for example, an SBR modified with a compound (modifier) represented by the following formula is suitable for use.

[Chem. 1]

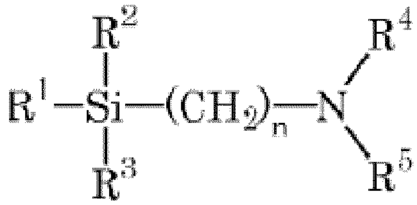

(wherein $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. And "n" represents an integer.)

As the modified SBR modified with the compound (modifier) represented by the above formula, an SBR obtained by modifying the polymerization terminals (active terminals) of a solution-polymerized styrene-butadiene rubber (S-SBR) with the compound represented by the above formula (modified SBR disclosed in Japanese Laid-Open Patent Publication No. 2010-111753, etc.) is suitable for use.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable. These compounds may be used individually, or two or more of these compounds may be used in combination.

As the modified high-styrene-content SBR, a modified SBR modified with the following compound (modifier) is suitable for use. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl] sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-co-laurolactam, N-vinyl-ω-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Among them, modified SBRs modified with alkoxysilanes are preferable.

Modification with the above compounds (modifiers) can be carried out by a known method.

As the high-styrene-content SBR, for example, SBRs manufactured by and available from Sumitomo Chemical Co., Ltd., JSR Corporation, Asahi Kasei Corporation, Zeon Corporation, etc., can be used. The above high-styrene-content SBRs may be used individually, or two or more thereof may be used in combination.

As the rubber component used in the tread rubber composition, another rubber component may be blended in addition to the high-styrene-content SBR. Examples of the other rubber component include isoprene-based rubbers (isoprene rubber (IR), epoxidized isoprene rubber, hydrogenated isoprene rubber, grafted isoprene rubber, natural rubber (NR), deproteinized natural rubber (DPNR), ultra-pure natural rubber (UPNR), epoxidized natural rubber (ENR), hydrogenated natural rubber (HNR), and grafted natural rubber), styrene-butadiene rubber (SBR) other than the high-styrene-content SBR, butadiene rubber (BR), styrene-isoprene-butadiene rubber (SIBR), chloroprene rubber (CR), and acrylonitrile butadiene rubber (NBR). These rubbers may be used individually, or two or more of these rubbers may be used in combination.

From the viewpoint of grip performance under a low load and grip performance under a high load, the tread rubber composition contains the large-particle-diameter carbon black.

The average particle diameter of the large-particle-diameter carbon black is not less than 20 nm, preferably not less than 24 nm, and more preferably not less than 28 nm. The upper limit of the average particle diameter is not particularly limited, but, from the viewpoint of dispersibility, the average particle diameter is preferably not greater than 45 nm, more preferably not greater than 40 nm, and further preferably not greater than 35 nm.

The average particle diameter of the carbon black is a number average particle diameter and is measured with a transmission electron microscope.

From the viewpoint of grip performance under a low load and grip performance under a high load, the nitrogen adsorption specific surface area ($N_2SA$) of the large-particle-diameter carbon black is preferably not less than 50 $m^2/g$, more preferably not less than 70 $m^2/g$, and further preferably not less than 100 $m^2/g$. The upper limit of the $N_2SA$ is not particularly limited, but, from the viewpoint of dispersibility, the $N_2SA$ is preferably not greater than 150 $m^2/g$, more preferably not greater than 140 $m^2/g$, and further preferably not greater than 130 $m^2/g$.

The $N_2SA$ of the carbon black is obtained according to JIS K6217-2: 2001.

The amount of the large-particle-diameter carbon black per 100 parts by mass of the rubber component is preferably not less than 60 parts by mass, more preferably not less than 90 parts by mass, and further preferably not less than 110 parts by mass. When the amount is set to be not less than the lower limit, good grip performance under a low load and good grip performance under a high load tend to be achieved. In addition, the amount is preferably not greater than 150 parts by mass, more preferably not greater than 140 parts by mass, and further preferably not greater than 130 parts by mass. When the amount is set to be not greater than the upper limit, good processability tends to be achieved.

Usable large-particle-diameter carbon black is not particularly limited, and examples thereof include N220, N330, and N550. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co.,

etc., can be used. These carbon blacks may be used individually, or two or more of these carbon blacks may be used in combination.

Silica may be blended in the tread rubber composition.

The silica is not particularly limited, and, for example, dry-process silica (anhydrous silica), wet-process silica (hydrous silica), etc., can be used, but wet-process silica (hydrous silica) is preferable for the reason that it has a higher silanol group content. As commercially available products, products of Degussa, Rhodia, Tosoh Silica Corporation, Solvay Japan, Ltd., Tokuyama Corporation, etc., can be used. One of these types of silica may be used individually, or two or more thereof may be used in combination.

The nitrogen adsorption specific surface area ($N_2SA$) of the silica is preferably not less than 80 $m^2/g$, more preferably not less than 115 $m^2/g$, and further preferably not less than 150 $m^2/g$. When the $N_2SA$ is set to be not less than the lower limit, good grip performance tends to be achieved. In addition, the $N_2SA$ is preferably not greater than 400 $m^2/g$, more preferably not greater than 270 $m^2/g$, and further preferably not greater than 250 $m^2/g$. When the $N_2SA$ is set to be not greater than the upper limit, good silica dispersibility tends to be achieved.

The $N_2SA$ of the silica is a value measured by the BET method according to ASTM D3037-93.

The amount of the silica per 100 parts by mass of the rubber component is preferably not less than 50 parts by mass, more preferably not less than 80 parts by mass, and further preferably not less than 90 parts by mass. Accordingly, sufficient reinforcing properties can be obtained, and good wet grip performance at an initial stage of running tends to be achieved. In addition, the upper limit of the amount is not particularly limited, but the amount is preferably not greater than 200 parts by mass, more preferably not greater than 150 parts by mass, and further preferably not greater than 140 parts by mass. When the amount is set to be not greater than the upper limit, good silica dispersibility tends to be easily achieved.

In the case where the tread rubber composition contains silica, the tread rubber composition preferably contains a silane coupling agent together with the silica.

As the silane coupling agent, any silane coupling agent that is conventionally used in combination with silica in the rubber industry can be used. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3 -trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3 -triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination. Among them, sulfide silane coupling agents and mercapto silane coupling agents are preferable.

In the case where the tread rubber composition contains a silane coupling agent, the amount of the silane coupling agent per 100 parts by mass of the silica is preferably not less than 2 parts by mass and more preferably not less than 5 parts by mass. When the amount is set to be not less than the lower limit, the effect to be achieved by blending the silane coupling agent tends to be obtained. In addition, the amount is preferably not greater than 20 parts by mass and more preferably not greater than 15 parts by mass. When the amount is set to be not greater than the upper limit, an effect corresponding to the blending amount is achieved, and good processability at the time of kneading tends to be achieved.

In the tread rubber composition, another filler may be blended in addition to the large-particle-diameter carbon black and the silica. Examples of the other filler include calcium carbonate, talc, alumina, clay, aluminum hydroxide, mica, and carbon black other than the large-particle-diameter carbon black.

An oil may be blended in the tread rubber composition. When the oil is blended, the processability is improved, and flexibility can also be provided to a tire.

Examples of the oil include process oils, vegetable fats and oils, and mixtures thereof. As the process oil, for example, paraffinic process oil, aromatic process oil, or naphthenic process oil can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. As commercially available products, products of Idemitsu Kosan

Co., Ltd., Sankyo Yuka Kogyo K.K., JXTG Nippon Oil & Energy Corporation, Olisoy, H&R, Hokoku Corporation, Showa Shell Sekiyu K.K., FUJI KOSAN COMPANY, LTD., etc., can be used. These oils may be used individually, or two or more of these oils may be used in combination. Among them, aromatic process oil is preferable.

From the viewpoint of processability and the like, the amount of the oil per 100 parts by mass of the rubber component is preferably not less than 10 parts by mass, more preferably not less than 30 parts by mass, and further preferably not less than 45 parts by mass. In addition, from the viewpoint of adhesion to a kneading machine, the amount is preferably not greater than 150 parts by mass, more preferably not greater than 140 parts by mass, and further preferably not greater than 135 parts by mass.

In the present specification, the amount of the oil also includes the amount of oil included in oil-extended rubber.

In the tread rubber composition, a resin in solid form at normal temperature (25°C) may be blended. The amount of the resin per 100 parts by mass of the rubber component is preferably 3 to 50 parts by mass and more preferably 7 to 40 parts by mass.

Examples of the resin include aromatic vinyl polymers, coumarone-indene resins, indene resins, rosin-based resins, terpene-based resins, and acrylic-based resins. As commercially available products, products of Maruzen Petrochemical Co., Ltd., Sumitomo Bakelite Co., Ltd., YASUHARA CHEMICAL CO., LTD, Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used. These resins may be used individually, or two or more of these resins may be used in combination. Among them, aromatic vinyl polymers, coumarone-indene resins, terpene-based resins, and rosin-based resins are preferable.

Examples of the above aromatic vinyl polymers include resins obtained by polymerizing $\alpha$-methylstyrene and/or styrene, and examples of such resins include styrene homopolymers, $\alpha$-methylstyrene homopolymers, and copolymers of $\alpha$-methylstyrene and styrene. Among them, copolymers of $\alpha$-methylstyrene and styrene are preferable.

The above coumarone-indene resins refer to resins that contain coumarone and indene as main monomer components that form the backbone (main chain) of the resins. Examples of the monomer components included in the backbone other than coumarone and indene include styrene, $\alpha$-methylstyrene, methylindene, and vinyltoluene.

The above indene resins refer to resins that contain indene as a main monomer component that forms the backbone (main chain) of the resins.

The above rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically modified rosins. Modified rosins are obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The rosin-based resins preferably have a carboxyl group content not excessively high and preferably have an appropriate acid value. Specifically, the acid values of rosin-based resins ordinarily exceed 0 mg KOH/g and is, for example, not greater than 200 mg KOH/g, preferably not greater than 100 mg KOH/g, more preferably not greater than 30 mg KOH/g, and further preferably not greater than 10 mg KOH/g.

The acid values can be measured in accordance with Examples described later. When, for example, a rosin has an excessively high acid value, the acid value can be adjusted to fall within the above range by reducing the carboxyl groups of the rosin through known esterification treatment.

As the above terpene-based resins, a polyterpene resin obtained by polymerizing a terpene compound, an aromatic modified terpene resin obtained by polymerizing a terpene compound and an aromatic compound, etc., can be used. Moreover, hydrogenated products of these resins can also be used.

The above polyterpene resin is a resin that is obtained by polymerizing a terpene compound. The terpene compound is a hydrocarbon represented by a composition $(C_5H_8)_n$ and an oxygenated derivative thereof, and is a compound having, as the basic backbone, a terpene classified into monoterpene ($C_{10}H_{16}$), sesquiterpene ($C_{15}H_{24}$), diterpene ($C_{20}H_{32}$), and the like. Examples of the terpene compound include $\alpha$-pinene, $\beta$-pinene, dipentene, limonene, myrcene, allo-ocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the above polyterpene resins include pinene resins, limonene resins, dipentene resins, and pinene-limonene resins which are formed from the above-described terpene compounds. Among them, pinene resins are preferable since a polymerization reaction is easy and since natural pine resin is a raw material and thus the cost is low. In general, pinene resins contain both $\alpha$-pinene and $\beta$-pinene, which are isomeric with each other. Depending on contained components, pinene resins are classified into $\beta$-pinene resins containing $\beta$-pinene as a main component, and $\alpha$-pinene resins containing $\alpha$-pinene as a main component.

Examples of the above aromatic modified terpene resin include terpene-phenol resins formed from the above

terpene compounds and phenol-based compounds, and terpene-styrene resins formed from the above terpene compounds and styrene-based compounds. Moreover, terpene-phenol-styrene resins formed from the above terpene compounds, phenol-based compounds, and styrene-based compounds can also be used. Examples of phenol-based compounds include phenol, bisphenol A, cresol, and xylenol. Examples of styrene-based compounds include styrene and $\alpha$-methylstyrene.

A fatty acid amide may be blended in the tread rubber composition.

The amount of the fatty acid amide per 100 parts by mass of the rubber component is preferably not less than 1.0 part by mass, more preferably not less than 1.5 parts by mass, and further preferably not less than 2.0 parts by mass. When the amount is set to be not less than the lower limit, good metal adhesion inhibition tends to be achieved. The amount is preferably not greater than 10.0 parts by mass, more preferably not greater than 8.0 parts by mass, and further preferably not greater than 6.0 parts by mass. When the amount is set to be not greater than the upper limit, good performance balance and good metal adhesion inhibition tend to be achieved.

The fatty acid amide may be a saturated fatty acid amide or an unsaturated fatty acid amide. Examples of the saturated fatty acid amide include N-(1-oxooctadecyl)sarcosine, stearic acid amide, and behenic acid amide. Examples of the unsaturated fatty acid amide include oleic acid amide and erucic acid amide. The fatty acid forming the fatty acid amide preferably has 6 to 28 carbon atoms, more preferably has 10 to 25 carbon atoms, and further preferably has 14 to 20 carbon atoms. These fatty acid amides may be used individually, or two or more of these fatty acid amides may be used in combination.

For the tread rubber composition, it is possible to suitably use also a mixture further containing a fatty acid metal salt in addition to the fatty acid amide.

The fatty acid forming the fatty acid metal salt is not particularly limited and may be a saturated or unsaturated fatty acid (saturated or unsaturated fatty acid preferably having 6 to 28 carbon atoms (more preferably having 10 to 25 carbon atoms and further preferably having 14 to 20 carbon atoms)), and examples thereof include lauric acid, myristic acid, palmitic acid, stearic acid, oleic acid, linoleic acid, linolenic acid, arachidic acid, behenic acid, and nervonic acid. These fatty acids may be used singly, or two or more of these fatty acids may be used in combination. Among them, saturated fatty acids are preferable and saturated fatty acids having 14 to 20 carbon atoms are more preferable.

Examples of the metal forming the fatty acid metal salt include alkali metals such as potassium and sodium, alkaline earth metals such as magnesium, calcium, and barium, zinc, nickel, and molybdenum.

The amount of the mixture per 100 parts by mass of the rubber component is preferably not less than 1.0 part by mass, more preferably not less than 1.5 parts by mass, and further preferably not less than 2.0 parts by mass. Meanwhile, the amount is preferably not greater than 10.0 parts by mass, more preferably not greater than 8.0 parts by mass, and further preferably not greater than 6.0 parts by mass.

The tread rubber composition preferably contains sulfur (sulfur vulcanization agent).

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

The amount of the sulfur (sulfur vulcanization agent) per 100 parts by mass of the rubber component is preferably not less than 1.0 part by mass, more preferably not less than 2.0 parts by mass, and further preferably not less than 2.5 parts by mass. When the amount is set to be not less than the lower limit, good grip performance under a high load tends to be achieved. The upper limit of the amount is not particularly limited, but the amount is preferably not greater than 7.0 parts by mass, more preferably not greater than 5.0 parts by mass, and further preferably not greater than 4.5 parts by mass.

The tread rubber composition preferably contains a vulcanization accelerator.

Examples of the vulcanization accelerator include: thiazole-based vulcanization accelerators such as 2-mercaptobenzothiazole, di-2-benzothiazolyl disulfide (DM (2,2'-dibenzothiazolyl disulfide)), and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, sulfenamide-based vulcanization accelerators and thiazole-based vulcanization accelerators are preferable.

From the viewpoint of vulcanization characteristics and the like, the amount of the vulcanization accelerator per 100 parts by mass of the rubber component is preferably not less than 0.5 parts by mass and more preferably not less than 0.7 parts by mass. In addition, from the viewpoint of process passability, the amount is preferably not greater than 5.0 parts by mass, more preferably not greater than 3.5 parts by mass, and further preferably not greater than 3.0

parts by mass. When the amount is within the above numerical range, good grip performance under a low load and good grip performance under a high load tend to be achieved.

The tread rubber composition preferably contains a wax. The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. As commercially available products, products of Ouchi Shinko Chemical Industrial Co., Ltd., NIPPON SEIRO CO., LTD., Seiko Chemical Co., Ltd., etc., can be used. These waxes may be used individually, or two or more of these waxes may be used in combination. Among them, petroleum waxes are preferable, and paraffin wax is more preferable.

The amount of the wax per 100 parts by mass of the rubber component is preferably not less than 0.5 parts by mass and more preferably not less than 1 part by mass. Meanwhile, the amount is preferably not greater than 10 parts by mass and more preferably not greater than 6 parts by mass.

The tread rubber composition preferably contains an antioxidant.

The antioxidant is not particularly limited, and examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N' -phenyl-p-phenylenediamine, and N,N' -di-2-naphthyl-p-phenylenediamine; quinoline antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. As commercially available products, products of Seiko Chemical Co., Ltd., Sumitomo Chemical Co., Ltd., Ouchi Shinko Chemical Industrial Co., Ltd., Flexsys, etc., can be used. These antioxidants may be used individually, or two or more of these antioxidants may be used in combination. Among them, p-phenylenediamine antioxidants (more preferably N-(1,3-dimethylbutyl)-N'-phenyl-p-phenylenediamine) are preferable.

The amount of the antioxidant per 100 parts by mass of the rubber component is preferably not less than 0.3 parts by mass and more preferably not less than 1 part by mass. In addition, the amount is preferably not greater than 7 parts by mass, more preferably not greater than 6 parts by mass, and further preferably not greater than 5 parts by mass.

The tread rubber composition preferably contains a fatty acid, particularly stearic acid.

As the stearic acid, conventionally known stearic acids can be used. For example, products of NOF Corporation, Kao Corporation, FUJIFILM Wako Pure Chemical Corporation, New Japan Chemical Co., Ltd., etc., can be used.

The amount of the fatty acid per 100 parts by mass of the rubber component is preferably not less than 0.5 parts by mass and more preferably not less than 1 part by mass. Meanwhile, the amount is preferably not greater than 10 parts by mass and more preferably not greater than 5 parts by mass.

The tread rubber composition preferably contains zinc oxide.

As the zinc oxide, conventionally known zinc oxides can be used. For example, products of Mitsui Mining & Smelting Co., Ltd., Toho Zinc Co., Ltd., HAKUSUI TECH CO., LTD., SEIDO CHEMICAL INDUSTRY CO., LTD., Sakai Chemical Industry Co., Ltd., etc., can be used.

The amount of the zinc oxide per 100 parts by mass of the rubber component is preferably not less than 0.5 parts by mass and more preferably not less than 1 part by mass. Meanwhile, the amount is preferably not greater than 5 parts by mass and more preferably not greater than 4 parts by mass.

In addition to the aforementioned components, additives that are generally used in the tire industry can be blended in the tread rubber composition, and examples of the additives include processing aids and surfactants.

As a method for producing the tread rubber composition (vulcanized tread rubber composition), a known method can be used. For example, the tread rubber composition can be produced by a method in which the components are kneaded by using a rubber kneading device such as an open roll, a Banbury mixer, or a kneader, and then vulcanization is performed.

As for the kneading conditions, in a base kneading step of kneading the additives other than a cross-linking agent (vulcanizing agent) and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and preferably 85 to 110°C. In addition, a composition obtained by kneading the vulcanizing agent and the vulcanization accelerator is normally subjected to vulcanization processing such as press vulcanization. The vulcanization temperature is normally 140 to 190°C and preferably 150 to 185°C.

The pneumatic tire according to the present invention is produced by a general method using the above tread rubber composition. Specifically, the tread rubber composition obtained by blending the above components is extruded in an unvulcanized state so as to correspond to the shape of, for example, a tread (a member, which is brought into contact with a road surface, such as a single-layer tread or a cap tread of a multilayer tread), and is formed together with other tire members on a tire forming machine by a general method, thereby forming an unvulcanized tire. The unvulcanized tire is heated and pressurized in a vulcanizing machine, thereby obtaining the tire.

The tire can be used as a tire for a passenger car, a tire for a large passenger car or a large SUV, a heavy-duty tire for a truck or a bus, a tire for a light truck, a tire for a motorcycle, a tire for racing (high-performance tire), etc. Particularly, the tire is suitable as a tire for racing.

EXAMPLES

The present invention will be specifically described by means of examples, but the present invention is not limited to these examples.

Various chemicals used in examples and comparative examples are collectively described below.

SBR 1: TUFDENE 3830 (styrene content: 36% by mass, vinyl content: 31% by mass, containing 37.5 parts by mass of oil per 100 parts by mass of rubber solid contents) manufactured by Asahi Kasei Corporation

SBR 2: Nipol NS522 (styrene content: 38.0% by mass, vinyl content: 40% by mass, containing 37.5 parts by mass of oil per 100 parts by mass of rubber solid contents) manufactured by Zeon Corporation

SBR 3: SBR 1502 (styrene content: 23.5% by mass, vinyl content: 16% by mass, non-oil-extended) manufactured by JSR Corporation

Carbon black 1: DIABLACK N220 (average particle diameter: 24 nm, $N_2SA$: 114 $m^2/g$) manufactured by Mitsubishi Chemical Corporation

Carbon black 2: N110 (average particle diameter: 20 nm, $N_2SA$: 127 $m^2/g$) manufactured by Mitsubishi Chemical Corporation

Carbon black 3: a trial product (average particle diameter: 16 nm, $N_2SA$: 180 $m^2/g$)

Process oil: A/O Mix manufactured by Sankyo Yuka Kogyo K.K.

Wax: OZOACE manufactured by NIPPON SEIRO CO., LTD.

Antioxidant 6C: NOCRAC 6C (N-(1,3-dimethylbutyl)-N'-phenyl-p-phenylenediamine) manufactured by Ouchi Shinko Chemical Industrial Co., Ltd.

Antioxidant RD: NOCRAC RD (poly(2,2,4-trimethyl-1,2-dihydroquinoline)) manufactured by Ouchi Shinko Chemical Industrial Co., Ltd.

Fatty acid amide: ULTRA-LUBE 160 (Structure of fatty acid soaps and amides) manufactured by Performance Additives

Stearic acid: Tsubaki manufactured by NOF Corporation

Zinc oxide: zinc oxide manufactured by Mitsui Mining & Smelting Co., Ltd.

Sulfur: HK-200-5 (5%-oil sulfur) manufactured by Hosoi Chemical Industry Co., Ltd.

Vulcanization accelerator CZ: NOCCELER CZ (N-cyclohexyl-2-benzothiazolyl sulfenamide) manufactured by Ouchi Shinko Chemical Industrial Co., Ltd.

Vulcanization accelerator M: NOCCELER M (2-mercaptobenzothiazole) manufactured by Ouchi Shinko Chemical Industrial Co., Ltd.

(Examples and Comparative Examples)

In accordance with each of the blending formulas shown in Table 1, the chemicals other than the sulfur and the vulcanization accelerator were kneaded under a condition of 150°C for 5 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized rubber composition. The obtained unvulcanized rubber composition was formed into the shape of a tread, and attached together with other tire members to produce an unvulcanized tire, and the unvulcanized tire was press-vulcanized under a condition of 170°C for 10 minutes to obtain a test tire (size: 195/65R15). Rubber test piece evaluations were performed on a rubber that was cut out from the tread portion of each test tire.

The obtained test tires and rubber test pieces were evaluated as described below. The results are shown in Table 1.

(Grip performance under low load (grip performance at 1st touch))

When each test tire was pressed against a hard road surface at 0.74 kN and a camber angle of 0 degree, the ground contact feeling was evaluated through sensory evaluation. The evaluated ground contact feeling is indicated as an index with the ground contact feeling of Comparative Example 1 being defined as 100. A higher index indicates that the grip performance under a low load is better. If the index is not less than 80, there is no problem in terms of practical use.

(Grip performance under high load (firm feeling))

When each test tire was pressed against a hard road surface at 1.48 kN and a camber angle of 0 degree, the ground contact feeling was evaluated through sensory evaluation. The evaluated ground contact feeling is indicated as

an index with the ground contact feeling of Comparative Example 1 being defined as 100. A higher index indicates that the grip performance under a high load is better.

(M300)

Based on JIS K6251: 2010, a tensile test was carried out at normal temperature (25°C) using a No. 6 dumbbell type test piece made from a rubber test piece that was cut out from each of the treads of the above test tires, and stress at 300% elongation (M300) (MPa) was measured.

(E*)

The complex elastic modulus E* (MPa) of a rubber test piece that was cut out from each of the treads of the above test tires was measured using a viscoelastic spectrometer VES (manufactured by Iwamoto Seisakusho) under the conditions of a temperature of 25°C, a frequency of 10 Hz, an initial strain of 10%, and a dynamic strain of 0.25%.

(Acetone-extractable content (AE content))

For a rubber test piece that was cut out from each of the treads of the above test tires, the amount of materials contained in the test piece and extracted by acetone was measured according to an acetone-extractable content measurement method conforming to JIS K 6229.

Acetone-extractable content (%) = (mass of sample before extraction - mass of sample after extraction) / mass of sample before extraction × 100

[Table 1]

| | | Example | | | | | | Comparative Example | |
|---|---|---|---|---|---|---|---|---|---|
| | | 1 | 2 | 3 | 4 | 5 | 6 | 1 | 2 |
| Blending formula (parts by mass) | SBR 1 (styrene: 36, vinyl: 31) | | 137,5 | 137,5 | 137,5 | 137,5 | 137,5 | | 137,5 |
| | SBR 2 (styrene: 38.0, vinyl: 40) | 137,5 | | | | | | | |
| | SBR 3 (styrene: 23.5, vinyl: 16) | | | | | | | 100 | |
| | Carbon black 1 (particle diameter: 24 | 120 | 120 | 120 | | 100 | 140 | 120 | |
| | Carbon black 2 (particle diameter: 20 nm) | | | | 120 | | | | |
| | Carbon black 3 (particle diameter: 16 nm) | | | | | | | | 120 |
| | Process oil | 90 | 70 | 32,5 | 70 | 70 | 70 | 70 | 70 |
| | Wax | 5 | 5 | 5 | 5 | 5 | 5 | 5 | 5 |
| | Antioxidant 6C | 2 | 2 | 2 | 2 | 2 | 2 | 2 | 2 |
| | Antioxidant RD | 0,5 | 0,5 | 0,5 | 0,5 | 0,5 | 0,5 | 0,5 | 0,5 |
| | Fatty acid amide | 3 | 3 | 3 | 3 | 3 | 3 | 3 | 3 |
| | Stearic acid | 2 | 2 | 2 | 2 | 2 | 2 | 2 | 2 |
| | Zinc oxide | 3 | 3 | 3 | 3 | 3 | 3 | 3 | 3 |
| | Sulfur | 3 | 3 | 3 | 3 | 3 | 3 | 3 | 3 |
| | Vulcanization accelerator CZ | 2,5 | 2,5 | 2,5 | 2,5 | 2,5 | 2,5 | 2,5 | 2,5 |
| | Vulcanization accelerator M | 0,4 | 0,4 | 0,4 | 0,4 | 0,4 | 0,4 | 0,4 | 0,4 |
| Evaluation | M300/E* | 0,68 | 0,73 | 0,76 | 0,67 | 0,57 | 0,71 | 0,35 | 0,40 |
| | M300 (MPa) | 6,1 | 7,3 | 9,1 | 8,0 | 4,0 | 10,0 | 4,0 | 7,8 |
| | E* (MPa) | 9,0 | 10,0 | 12,0 | 12,0 | 7,0 | 14,0 | 11,5 | 19,5 |
| | AE (%) | 35,0 | 32,5 | 25,0 | 32,5 | 35,0 | 20,0 | 25,0 | 30,0 |
| | Grip performance under low load (grip performance at 1st touch) | 105 | 105 | 95 | 100 | 130 | 80 | 100 | 60 |
| | Grip performance under high load (firm feeling) | 135 | 145 | 160 | 150 | 110 | 170 | 100 | 150 |

Table 1 demonstrates that good grip performance under a low load and good grip performance under a high load are achieved in the Examples in which a high-styrene-content styrene-butadiene rubber having a styrene content not less than 35.0% by mass and a vinyl content of 10 to 45% by mass, and large-particle-diameter carbon black having an average particle diameter not less than 20 nm are contained, and M300 at a temperature of 25°C and E* at a temperature of 25°C and a dynamic strain of 0.25% satisfy a predetermined relationship.

## Claims

**1.** A tread rubber composition containing a high-styrene-content styrene-butadiene rubber having a styrene content

not less than 35.0% by mass and a vinyl content of 10 to 45% by mass, and large-particle-diameter carbon black having an average particle diameter not less than 20 nm, wherein M300 at a temperature of 25°C and E* at a temperature of 25°C and a dynamic strain of 0.25% of the tread rubber composition satisfy the following formula,

$$M300/E^{*} > 0.50.$$

**2.** The tread rubber composition according to claim 1, wherein the tread rubber composition satisfies the following formula,

$$M300/E^{*} > 0.60.$$

**3.** The tread rubber composition according to claim 1, wherein the tread rubber composition satisfies the following formula,

$$M300/E^{*} > 0.70.$$

**4.** The tread rubber composition according to any one of claims 1 to 3, wherein the tread rubber composition has an acetone-extractable content AE that satisfies the following formula,

$$AE \geq 20.0\ [\%].$$

**5.** The tread rubber composition according to any one of claims 1 to 3, wherein the tread rubber composition has an acetone-extractable content AE that satisfies the following formula,

$$AE \geq 25.0\ [\%].$$

**6.** The tread rubber composition according to any one of claims 1 to 3, wherein the tread rubber composition has an acetone-extractable content AE that satisfies the following formula,

$$AE \geq 30.0\ [\%].$$

**7.** The tread rubber composition according to any one of claims 1 to 6, wherein the tread rubber composition contains 60 to 150 parts by mass of the large-particle-diameter carbon black per 100 parts by mass of a rubber component.

**8.** A pneumatic tire comprising a tread formed from the tread rubber composition according to any one of claims 1 to 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010111753 A